(19) Europäisches Patentamt
European Patent Office
Office européen des brevets

(11) **EP 3 515 815 B1**

(12) **EUROPÄISCHE PATENTSCHRIFT**

(45) Veröffentlichungstag und Bekanntmachung des Hinweises auf die Patenterteilung:
**09.06.2021 Patentblatt 2021/23**

(21) Anmeldenummer: **17772653.6**

(22) Anmeldetag: **15.09.2017**

(51) Int Cl.:
**B64C 13/16** (2006.01)

(86) Internationale Anmeldenummer:
**PCT/EP2017/073362**

(87) Internationale Veröffentlichungsnummer:
**WO 2018/050866 (22.03.2018 Gazette 2018/12)**

(54) **VERMINDERUNG VON AN EINEM LUFTFAHRZEUG AUFTRETENDEN BÖENLASTEN**

REDUCING GUST LOADS ACTING ON AN AIRCRAFT

RÉDUCTION DES CHARGES DE RAFALES SE PRODUISANT SUR UN AÉRONEF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2016 DE 102016117638**

(43) Veröffentlichungstag der Anmeldung:
**31.07.2019 Patentblatt 2019/31**

(73) Patentinhaber: **Deutsches Zentrum für Luft- und Raumfahrt e.V.**
**51147 Köln (DE)**

(72) Erfinder: **VAN DER LINDEN, Franciscus**
**81375 München (DE)**

(74) Vertreter: **Rösler Rasch van der Heide & Partner**
**Bodenseestraße 18**
**81241 München (DE)**

(56) Entgegenhaltungen:
**EP-A1- 1 814 006        WO-A1-2015/088967**
**WO-A2-2012/168086**

**Beschreibung**

Die Erfindung betrifft eine Vorrichtung und ein Verfahren zur Verminderung von an einem Luftfahrzeug auftretenden Böenlasten. Weiterhin betrifft die Erfindung ein Luftfahrzeug mit einer ebensolchen Vorrichtung.

Vorrichtungen zur Verminderung von Böenlasten an einem Luftfahrzeug sind bekannt. Die Vorrichtungen umfassen typischerweise einen nahe dem Schwerpunkt des Luftfahrzeugs angeordneten Beschleunigungssensor zur Erfassung von durch Böen hervorgerufenen Beschleunigungen des Luftfahrzeugs. Die Zusatzbeschleunigung aufgrund von Böen wird dabei aus der Gesamtbeschleunigung, die auf das Luftfahrzeug wirkt und zu der insbesondere Beschleunigungen des Luftfahrzeugs bei Manövern beitragen, herausgerechnet. Zur Kompensation der durch Böen erzeugten Zusatzlasten/Zusatzbeschleunigungen auf das Luftfahrzeug werden Aktoren, die aerodynamisch wirksame Steuerflächen des Luftfahrzeugs ansteuern, derart aktiv angesteuert, dass die Zusatzlast der Böe kompensiert wird. Damit wird sowohl der erforderliche Gesamtauftrieb des Luftfahrzeugs als auch das Biegemoment an der Tragflächenwurzel (engl. "Root Bending Moment") verringert.

Aus der DE10 2014 108 336 A1 geht ein Verfahren zur Reduzierung des Einflusses von Luftströmungsverwirbelungen auf Luftfahrzeuge und eine Luftfahrzeugregelungseinheit hervor, die eine Basisregelungseinheit zur Regelung des Flugzustandes des Luftfahrzeugs in Abhängigkeit von vorgegebenen Lagesteuerungswerten, und eine Luftwirbelkompensationseinheit zur Erfassung von Luftströmungsverwirbelungen in der Umgebung des Luftfahrzeugs und zur Ermittlung von Kompensationswerten zur Reduzierung des Einflusses der erfassten Luftströmungsverwirbelungen haben, wobei die Ausgangssignale der Luftwirbelkompensationseinheit mit der Basisregelungseinheit verknüpft werden.

Aus der DE 10 2011 114 222 A1 ist eine elektronische Lastlimitierungsfunktion für einen elektromechanischen Aktuator der Flugsteuerung bekannt. Die elektronische Lastlimitierungsfunktion zeichnet sich dadurch aus, dass eine Stelllast des Aktuators elektronisch erfasst wird und bei Verlassen eines zulässigen Lastbereichs eine Manipulation von Signalen der Regelung des Aktuators erfolgt, sodass ein Verfahren des Aktuators und der anhängenden Steuerfläche in Richtung geringerer Stelllast erfolgt, die Last somit reduziert und die nominelle Regelung nach Abklingen der Überlast wieder aufgenommen wird.

Aus der WO 2009/144312 A1 ist ein System und ein Verfahren zur Ermittlung von Kenngrößen bei einem Luftfahrzeug bekannt. Das darin beschriebene Berechnungssystem für ein Luftfahrzeug umfasst mindestens einen Sensor zur Erfassung von aeroelastischen und flugmechanischen Bewegungsgrößen des Luftfahrzeugs, zur Erfassung von Positionen und Bewegungen der Steuerflächen des Luftfahrzeugs oder zur Erfassung von Geschwindigkeiten von auf das Luftfahrzeug wirkenden Windböen, sowie eine Berechnungseinheit, die in Abhängigkeit der von den Sensoren abgegebenen Sensordaten und einem nicht-linearen Simulationsmodell des Luftfahrzeugs Kenngrößen des Passagierkomforts und der Kabinensicherheit sowie Bewegungsgrößen des Luftfahrzeugs berechnet.

Aus der US 2016/0328891 A1 geht ein Verfahren sowie eine Vorrichtung zum Betrieb einer Flugsteuerung- und -regelung eines Flugzeugs hervor. Die vorgeschlagene Vorrichtung ermöglicht die Lokalisierung von mechanischen Blockaden eines Flugsteuerungs- und -regelungssystems des Flugzeugs.

Aus der US 8,050,780 B2 geht ein Steuerungssystem zur Steuerung eines Joysticks mit Kraftrückführung hervor.

Aus der US 2010/0332052 A1 geht ein Verfahren zur Identifizierung einer Vielzahl von Flugzuständen eines Luftfahrzeugs hervor. Das Verfahren umfasst ein Erfassen einer Auslenkung einer Kontrollfläche des Luftfahrzeugs durch einen Aktuator, ein Erfassen eines Stroms zu Ansteuerung des Aktuators, und ein Schätzen von Flugzuständen des Luftfahrzeugs basierend auf der erfassten Auslenkung der Kontrollfläche sowie des erfassten Stroms.

Aus der EP 1814006 A1 ist ein Verfahren sowie eine Vorrichtung zur Minimierung von dynamischen strukturellen Lasten auf ein Luftfahrzeug bekannt. Hierbei wird zunächst ein Signal erzeugt, welches eine externe Anregung der Luftfahrzeugstruktur repräsentiert. Zu Ansteuerung von aktuierten aerodynamischen Steuerflächen des Luftfahrzeugs wird ein Regelkreis mit Vorsteuerung verwendet. Zur Optimierung der Vorsteuerung werden Regelabweichungen mittels sogenannter "error sensors" erfasst und bei der Optimierung der Regelung berücksichtigt.

Weiterhin sind aus der WO 2012/168086A2 sowie aus der WO 2015/088967A1 jeweils Verfahren sowie Vorrichtung zur Minimierung von dynamischen strukturellen Lasten auf ein Luftfahrzeug bekannt.

Die Aufgabe der Erfindung ist es, eine gegenüber dem Stand der Technik verbesserte Vorrichtung bzw. ein Verfahren zur Verminderung von an einem Luftfahrzeug auftretenden Böenlasten anzugeben, wobei insbesondere eine Verminderung der auf die aerodynamischen Steuerflächen wirkenden Böenlasten ermöglicht werden soll, ohne auf einen zentralen Flugführungsrechner (engl. "Flight Control Computer") zurückzugreifen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft eine Vorrichtung zur Verminderung von an einer Anzahl n von aerodynamischen Steuerflächen eines Luftfahrzeugs auftretenden Böenlasten, wobei die aerodynamischen Steuerflächen jeweils durch zumindest einen Aktor bewegbar sind, und ein Flugsteuerungssystem des Luftfahrzeugs Führungsgrößen

$X_{soll}$ und/oder $\dot{X}_{soll}$ zur Ansteuerung des zumindest einen Aktors einer jeweiligen aerodynamischen Steuerfläche bereitstellt, wobei $X_{soll}$ eine Soll-Position oder eine Soll-Kraft oder ein Soll-Moment und $\dot{X}_{soll}$ eine zeitliche Änderung von $X_{soll}$ angibt.

Der Begriff "Luftfahrzeug" umfasst vorliegend alle Fluggeräte, die schwerer und auch leichter als Luft sind, insbesondere Flächenflugzeuge, Hubschrauber, Luftschiffe, Multikopter und Drohnen. Die Luftfahrzeuge können für eine Steuerung durch einen Menschen eingerichtet sein und/oder eine automatische Flugsteuerungsvorrichtung aufweisen, die einen automatischen/autonomen Betrieb des Luftfahrzeugs ermöglicht.

Der Begriff "Böenlast" beschreibt vorliegend die durch eine Einwirkung einer Böe auf das Luftfahrzeug bzw. auf die Stellflächen auftretende Zusatzkraft bzw. Zusatzmoment.

Der Begriff "Flugsteuerungssystem" umfasst vorteilhaft einen Flugrechner, der auf Basis von Vorgaben (Steuerungsinformationen) die Führungsgrößen $X_{soll}$ und/oder $\dot{X}_{soll}$ zur Ansteuerung des Aktors ermittelt und bereitstellt. Das Flugführungssystem ist vorteilhaft mit einem Eingabemittel verbunden, das Eingaben durch einen Piloten ermöglicht und somit Vorgaben $SV_{Pilot}$ (Steuerungsinformationen) erzeugt. Das Eingabemittel umfasst vorteilhaft Seitenruderpedale zur Vorgabe einer Stellung eines Seitenruders des Luftfahrzeugs sowie ein Mittel zur Eingabe einer Vorgabe von Stellungen eines Querruders und/oder eines Höhenruders. Dieses letztgenannte Mittel kann insbesondere als sogenannter "Sidestick" oder als "Steuerhorn" oder als "Steuerknüppel" ausgeführt sein.

Alternativ oder zusätzlich ist das Flugsteuerungssystem vorteilhaft mit einem System zur automatischen Flugsteuerung verbunden, das Vorgaben (Steuerungsinformationen) $SV_{AutoPilot}$ erzeugt. Dieses System zur automatischen Flugsteuerung umfasst vorteilhaft ein Autopilotensystem, das zur autonomen Flugführung ausgeführt und eingerichtet ist. Die Vorgaben: $SV_{Pilot}$ sowie $SV_{AutoPilot}$ sind vorteilhaft jeweils Vektoren, deren Vektorelemente Vorgaben (Steuerungsinformationen) für einen einzelnen Aktor und/oder eine Gruppe von Aktoren bereitstellen. In bemannten Luftfahrzeugen sind vorteilhaft das Eingabemittel für Piloten und das System zur automatischen Flugsteuerung vorhanden. In unbemannten Luftfahrzeugen (Drohnen) ist vorteilhaft nur das System zur automatischen Flugsteuerung vorhanden.

Die "Aktoren" können insbesondere sein: Hydraulikaktoren, elektromechanisch angetriebene Aktoren (beispielsweise umfassend einen Elektromotor mit und ohne Getriebe). Die Aktoren sind typischerweise über eine Mechanik (Triebstrang) mit den zugeordneten Steuerflächen verbunden, sodass diese von den Aktoren bewegbar sind. Aus Redundanzgründen treiben vorteilhaft zumindest zwei Aktoren eine Steuerfläche an. Die auf eine Steuerfläche einwirkende Last/Luftkraft wird dadurch auf den/die mit der Steuerfläche verbundenen Aktoren übertragen.

Der Begriff "Steuerflächen" umfasst vorliegend alle mittels Aktoren anlenkbare und verstellbare Steuerflächen, durch die eine gezielte Bewegung des Luftfahrzeugs im Fluge induziert werden kann, insbesondere: Querruder, Seitenruder, Höhenruder, Spoiler, Rotorblätter, Propellerblätter, Bremsklappen, Slats etc.

Der Begriff "Soll-Position" bezeichnet vorliegend insbesondere eine Längsposition oder eine Winkelposition. Der Begriff "Soll-Kraft" bezeichnet vorliegend insbesondere eine Kraft oder ein Moment. Je nachdem ob $X_{soll}$ eine Position oder eine Kraft bzw. ein Moment angibt, definiert sich das Regelungskonzept des nachstehend beschriebenen Reglers als Positions-geregelt oder als Kraft-/Momenten-geregelt.

Erfindungsgemäß weist die vorgeschlagene Vorrichtung ein Sensorsystem je aerodynamischer Steuerfläche auf, das auf die jeweilige aerodynamische Steuerfläche von extern einwirkende und durch Böen erzeugte Kräfte/Momente $F_{ext,Boe}$ ermittelt. Hierzu weist das Sensorsystem einen Kraftsensor oder einen Momentensensor auf, der zunächst die Gesamtkraft/das Gesamtmoment auf die aerodynamische Steuerfläche erfasst. Der Kraft- bzw. Momenten-Sensor ist dabei vorteilhaft im Aktor selbst, im Triebstrang des jeweiligen Aktors oder in der Verbindung zwischen Triebstrang und Steuerflächen angeordnet. Bei entsprechender Auslegung und Einrichtung kann der jeweilige Aktor selbst auch als Kraft- bzw. Momenten-Sensor verwendet werden. Das Sensorsystem ist vorteilhaft weiterhin derart ausgeführt und eingerichtet, dass es auf Basis der gemessenen (Gesamt-)Kraft bzw. des (Gesamt-)Momentes und unter Verwendung von Parametern, die den aerodynamischen Zustand des Luftfahrzeugs und den Zustand der umgebenden Luft beschreiben (beispielsweise Fluggeschwindigkeit, Flughöhe, Luftdichte, etc.), den von einer Bö verursachten Kraft-/Momenten-Anteil $F_{ext,Boe}$ ermittelt.

Die vorgeschlagene Vorrichtung umfasst weiterhin erfindungsgemäß einen jeweiligen Regler zur Regelung des zumindest einen Aktors auf Basis von: $F_{ext,Boe}$, der Führungsgrößen: $X_{soll}$ und/oder $\dot{X}_{soll}$ und vom Aktor erzeugter und von einem Sensorsystem erfasster Regelgrößen: $X$ und/oder $\dot{X}$, wobei der Regler ein Regelungsverhalten aufweist, bei dem die durch Böen erzeugten Kräfte/Momente $F_{ext,Boe}$ an der jeweiligen aerodynamischen Steuerfläche kompensiert werden. Das Sensorsystem zur Ermittlung bzw. Erfassung der Regelgrößen $X$ und/oder $\dot{X}$ umfasst je nach im Regler umgesetzter Regelungsphilosophie zumindest einen Kraft- oder Momenten-Sensor (sofern der Regler ein Kraftregler ist) oder zumindest einen Positionssensor (sofern der Regler ein Positionsregler ist).

Der Begriff "kompensieren" wird vorliegend in der Bedeutung "so weit wie möglich verringert" benutzt. Idealerweise wird dabei der Lasteintrag auf die Steuerfläche durch $F_{ext,Boe}$ vollständig aufgehoben.

Wird eine aerodynamische Steuerfläche von mehr als einem Aktor angetrieben, so werden diese Aktoren insgesamt derart geregelt, dass die durch Böen erzeugten Kräfte/Momente $F_{ext,Boe}$ kompensiert werden.

Eine vorteilhafte Weiterbildung der vorgeschlagenen Vorrichtung zeichnet sich dadurch aus, dass der jeweilige (Kraft-/Momenten-) Regler einen Prozessor aufweist, der mit einer Prozessortaktrate PT1 arbeitet und das Flugsteuerungssystem einen Prozessor aufweist, der mit einer Prozessortaktrate PT2 arbeitet, wobei gilt: PT1 > PT2, insbesondere PT1 > 2 $*$ PT2. Dies ermöglicht insbesondere bei auftretenden, extern auf die aerodynamischen Steuerflächen wirkenden Böen, eine entsprechend schnelle und daher effektive Regelung der betroffenen Aktoren.

Die vorgeschlagene Vorrichtung ermöglicht eine Verminderung der auf die aerodynamischen Steuerflächen wirkenden Böenlasten, ohne auf einen zentralen Flugführungsrechner (engl. "Flight Control Computer") zurückzugreifen. Im Gegensatz zum Stand der Technik werden vorliegend die durch Böen auf die aerodynamische Steuerfläche wirkenden Zusatz-Kräfte bzw. Zusatz-Momente direkt vor Ort (d.h. im Aktor, am Aktor, am/im Triebstrang oder an der Steuerfläche) von einem entsprechenden Kraft-/Momenten-Sensor erfasst. Besonders vorteilhaft ist der Aktor selbst der Sensor. Durch den vorgeschlagenen Regler wird zur Kompensation der ermittelten Böenlast vorteilhaft die "Steifigkeit" des Regelverhaltens verringert und damit die "Nachgiebigkeit" des Regelverhaltens hinsichtlich durch Böeneinwirkung bewirkter Zusatz-Kräfte/-Momente selektiv erhöht.

Mit der vorgeschlagenen Vorrichtung werden somit zumindest die auf die aktorisch bewegten aerodynamischen Steuerflächen des Luftfahrzeugs einwirkenden Böenlasten kompensiert. Im Idealfall (vollständige Kompensation) werden dadurch die Böenlasten auf die aerodynamischen Steuerflächen zu "Null" kompensiert. Die auf die anderen Strukturteile des Luftfahrzeugs, bspw. Rumpf, Tragflügel, Leitwerke etc., wirkenden Böenlasten werden hingegen selbst bei einer vollständigen Kompensation der auf die aerodynamischen Steuerflächen einwirkenden Böenlasten nicht verringert. Insbesondere bei einer höheren Taktrate des Reglers im Vergleich zum Flugführungssystem und der Autonomie des Reglers ist es möglich, Böenlasten auf die aerodynamischen Steuerflächen weitestgehend zu kompensieren, was bei den Böen-Minderungssystemen des Standes der Technik nicht möglich ist. Der durch die vorgeschlagene Vorrichtung erzielbare Beitrag zur Verringerung von Böenlasten auf das gesamte Luftfahrzeug hängt vom Verhältnis der bei Auftreten von Böen auf das Flugzeug wirksamen Gesamtfläche des Luftfahrzeugs zu der Fläche der aerodynamischen Steuerflächen ab, die mittels der hier vorgeschlagenen Vorrichtung angesteuert werden. Je nach Auslegung des Flugzeugs liegt dieser Beitrag dabei in einem Bereich von kleiner 10 % der auf das gesamte Luftfahrzeug wirkenden Böenlasten, wenn davon ausgegangen wird, dass die Bö auch auf das gesamte Flugzeug wirkt.

Eine vorteilhafte Weiterbildung der vorgeschlagenen Vorrichtung zeichnet sich dadurch aus, dass der jeweilige Regler ein Regelungsverhalten aufweist, bei dem die durch Böen erzeugten Kräfte/Momente $F_{ext,Boe}$ auf die jeweilige aerodynamischen Steuerfläche überkompensiert werden. In diesem Fall werden somit nicht nur die Böenlasten auf die jeweilige Steuerfläche kompensiert, sondern darüber hinaus wird die jeweilige aerodynamischen Steuerfläche derart angesteuert, dass ein/e zusätzliche/s Kraft/Moment auf die Flugzeugstruktur übertragen wird, die/das der an den jeweiligen aerodynamischen Steuerflächen erfassten Böenlasten entgegenwirkt. In dieser Weiterbildung wird durch den jeweiligen Regler somit ein aktiver Ausschlag der aerodynamischen Steuerfläche zur Verminderung der Böenlasten auf das gesamte Luftfahrzeug initiiert, wobei die Böenlasten im Gegensatz zum Stand der Technik von einem Kraft-/Momenten-Sensor der jeweiligen aerodynamischen Steuerfläche erfasst werden. Dies ermöglicht im Gegensatz zum Stand der Technik ein schnelleres und autonomes Reagieren und damit ein effektiveres Vermindern auftretender Böenlasten. In dieser Weiterbildung können die Böenlasten, die auf das gesamte Luftfahrzeug einwirken, in einem Bereich von bis zu 15 % der auf das gesamte Luftfahrzeug einwirkenden Böenlasten reduziert werden.

Eine vorteilhafte Weiterbildung der vorgeschlagenen Vorrichtung zeichnet sich dadurch aus, dass eine Führungsgrößen-Vorsteuerung für die Führungsgrößen: $X_{soll}$ und/oder $\dot{X}_{soll}$ vorhanden ist, wobei der zumindest eine Aktor der jeweiligen aerodynamischen Steuerfläche mit einer Stellgröße $S_{SOLL}$ angesteuert wird, die sich als Summe aus der Stellgröße $S_{FV}$ der Führungsgrößen-Vorsteuerung und der Stellgröße $S_{RE}$ des Reglers ergibt: $S_{SOLL} = S_{FV} + S_{RE}$. Der Führungsgrößen-Vorsteuerung werden hierzu die aktuell erfassten Regelgrößen: $X$ und/oder $\dot{X}$ zugeführt.

Die Führungsgrößen-Vorsteuerung ermöglicht eine Reibung und/oder Dynamik im jeweiligen Aktor und/oder eine Reibung und/oder Dynamik im dem jeweiligen Aktor A zugeordneten Triebstrang sowie insbesondere eine aufgrund eines Ausschlages der aerodynamischen Steuerfläche gemäß $X_{soll}$ und/oder $\dot{X}_{soll}$ zu erwartender Luftkraft auf die aerodynamische Steuerfläche (ohne Einwirkung von Böen) zu kompensieren.

Abhängig von der Art der vorgegebenen Führungsgröße $X_{soll}$ (Position oder Kraft/Moment) ist der jeweilige Regler vorteilhaft ein Positionsregler oder ein Stellratenregler oder ein Kraftregler. Ist der jeweilige Regler als Positionsregler ausgelegt, so regelt er vorteilhaft die aktuelle Position direkt, das heißt ohne Verwendung eines Kaskadenreglers. Der jeweilige Regler ist weiterhin vorteilhaft am Aktor oder in einer direkten Umgebung des Aktors angeordnet. Damit werden insbesondere lange Signallaufzeiten verhindert und schnellere Reaktionszeiten erzielt.

Eine vorteilhafte Weiterbildung der vorgeschlagenen Vorrichtung zeichnet sich dadurch aus, dass der jeweilige Regler folgendes Regelungsmodell verwendet:

$$(1) \qquad F_R = (X - X_{soll}) \cdot c + (\dot{X} - \dot{X}_{soll}) \cdot d$$

mit:

$F_R$: Stellgröße des Reglers, die eine Kraft angibt
X: Regelgröße, die eine Position angibt
$\dot{X}$: Zeitableitung der Regelgröße Position X
c: Steifigkeit
d: Dämpfung

wobei gilt: $S_{RE} = F_R$ und $S_{FV}$ eine Kraft angibt. Eine Änderung des Regelungsverhaltens bei Einwirkung externer Böenlasten wird insbesondere durch eine entsprechende Änderung der Steifigkeit c erreicht, d.h. insbesondere dass im Fall $F_{ext,Boe}$ = 0 oder $|F_{ext,Boe}|$ > G1 (G1 = vorgegebener Grenzwert), die Steifigkeit c niedrig gewählt wird.

Im Fall, dass eine Führungsgrößen-Vorsteuerung vorhanden ist, wird vorteilhaft die Steifigkeit c gering gewählt und nicht geändert, sodass sich grundsätzlich ein "nachgiebiges" Regelungsverhalten bei auftretenden externen Kräften oder Momenten ergibt. Die Führungsgrößen-Vorsteuerung ist in diesem Fall dagegen steif ausgeführt, sodass bei Vorliegen einer von einer aerodynamischen Neutralposition abweichenden Führungsgröße $X_{soll}$ eine entsprechend "steife" direkte Ansteuerung des Aktors durch die Führungsgrößen vor Steuerung erfolgt. Durch die dabei ausgeführte Summierung der Stellgröße $S_{FV}$ der Führungsgrößen-Vorsteuerung und der Stellgröße $S_{RE}$ des jeweiligen Reglers: $S_{SOLL}$ = $S_{FV}$ + $S_{RE}$ wird einerseits gewährleistet, dass die jeweilige aerodynamische Steuerfläche den für die beabsichtigte Flugführung erforderlichen Ausschlag erzielt, wobei durch den jeweiligen Regler und durch die gering gewählte Steifigkeit c das Reglerverhalten weiterhin eine Kompensation auftretender Böenlasten ermöglicht.

Eine vorteilhafte Weiterbildung der vorgeschlagenen Vorrichtung zeichnet sich dadurch aus, dass der jeweilige Regler folgendes Regelungsmodell verwendet:

$$(2) \qquad F_R = F_{soll} + F_{ext,Boe} \cdot k + \dot{X} \cdot d$$

mit:

$F_R$: Stellgröße $S_{RE}$ des Reglers, die eine Kraft angibt
X: Regelgröße, die eine Position angibt
$\dot{X}$: Zeitableitung der Regelgröße Position X
k: Parameter
d: Dämpfung

Vorteilhaft wird/werden die Steifigkeit c und/oder die Dämpfung d und/oder der Parameter k als Konstanten vorgegeben. Vorteilhaft wird/werden die Steifigkeit c und/oder die Dämpfung d und/oder der Parameter k abhängig von einem aktuellen Flugzustand des Luftfahrzeugs vorgegeben. Vorteilhaft wird/werden die Steifigkeit c und/oder die Dämpfung d und/oder der Parameter k abhängig von einem Frequenzspektrum der vom Sensorsystem ermittelten, auf die jeweilige Steuerfläche von extern einwirkenden Kräften/Momenten $F_{ext,Boe}$ vorgegeben. Dabei können die Steifigkeit c und/oder die Dämpfung d und/oder der Parameter k linear oder nicht linear variieren.

Eine vorteilhafte Weiterbildung der vorgeschlagenen Vorrichtung zeichnet sich dadurch aus, dass die Steifigkeit c einen ersten Wert c1 aufweist, der im Fall von $F_{ext,Boe}$ ≠ 0 oder $|F_{ext,Boe}|$ > G1 (G1 = vorgegebener Grenzwert) auf einen zweiten Wert c2 reduziert wird, mit c2 < c1 wobei c2 derart gewählt ist, dass $F_{ext,Boe}$ vollständig kompensiert oder überkompensiert wird. Zur Überkompensation der/des Kraft/ Moments $F_{ext,Boe}$ nimmt die Steifigkeit c vorteilhaft negative Werte an. Das Regelungsverhalten des jeweiligen Reglers bei Vorliegen von Böenlasten $F_{ext,Boe}$ ≠ 0 oder $|F_{ext,Boe}|$ > G1 (G1 = vorgegebener Grenzwert) auf die Steuerfläche wird dabei "nachgiebig" bzw." elastisch". Bei entsprechender Wahl der Streitigkeiten kann eine an der Steuerfläche auftretende Böenlast nahezu vollständig kompensiert werden.

Analog zeichnet sich eine Weiterbildung der vorgeschlagenen Vorrichtung dadurch aus, dass der Parameter k einen ersten Wert k1 aufweist, der im Fall von $F_{ext,Boe}$ ≠ 0 oder $|F_{ext,Boe}|$ > G1 (G1 = vorgegebener Grenzwert) auf einen zweiten Wert k2 reduziert wird, mit k2 < k1 wobei k2 derart gewählt ist, dass $F_{ext,Boe}$ vollständig kompensiert oder überkompensiert wird. Zur Überkompensation der Böenlast $F_{ext,Boe}$ kann k negative Werte annehmen.

Der jeweilige zumindest eine Aktor umfasst vorteilhaft einen Elektromotor (mit oder ohne Getriebe). Vorteilhaft ist für diesen Fall die Stellgröße $S_{SOLL}$ eine Soll-Kraft bzw. ein Soll-Moment, die/das als Führungsgröße einem Kraftregler zugeführt wird, wobei der Kraftregler einen Strom für den Elektromotor regelt.

Eine vorteilhafte Weiterbildung der vorgeschlagenen Vorrichtung zeichnet sich dadurch aus, dass das Sensorsystem zur Messung einer/eines extern auf die aerodynamische Steuerfläche einwirkenden Gesamtkraft/Gesamtmoments $F_{ext,Ges}$, mit $F_{ext,Ges} = F_{ext,Boe} + F_{ext,Rest}$ einen Kraft-/Momentensensor aufweist, wobei $F_{ext,Rest}$ eine/ein an der aerodynamischen Steuerfläche wirkende/s Kraft/Moment ohne Vorliegen von Böen angibt: $F_{ext,Boe}$ = 0, und das Sensorsystem derart ausgeführt und eingerichtet ist, dass auf Basis der Führungsgrößen $X_{soll}$ und/oder $\dot{X}_{soll}$ einer aktuellen Fluggeschwindigkeit des Luftfahrzeugs $V_{LuftFZ}$, einer aktuellen Flughöhe $H_{LuftFZ}$ des Luftfahrzeugs und einer aktuellen Temperatur $T_{LuftFZ}$ der das Luftfahrzeug umgebenden Luft eine darauf basierende Schätzung der an der aerodynamischen Steuerfläche wirkenden Luftkraft/Moment $F_{ext,Rest}^{*}$ ohne Vorliegen von Böen erfolgt. Auf Basis dieser Schätzung und der Messung der Gesamt-Kraft $F_{ext,Ges}$ ist es somit möglich, die/das zusätzliche durch Böen erzeugte Kraft/Moment $F_{ext,Boe}$ zu ermitteln.

Alternativ hierzu kann auf Basis der vom Sensorsystem gemessenen Gesamtkraft bzw. des vom Sensorsystem gemessenen Gesamtmoments $F_{ext,Ges}$, die Kraft/das Moment $F_{ext,Boe}$ durch eine geeignete Frequenzfilterung der gemessenen Größe $F_{ext,Ges}$ ermittelt werden. Dabei wird davon ausgegangen, dass die durch Böen erzeugten Kräfte/Momente höherfrequente Kraft/Momentanteile darstellen, und sich so von gezielt zur Flugführung erzeugten Ausschlägen der aerodynamischen Steuerflächen und dadurch bewirkten Luftkräften (niederfrequent) unterscheiden lassen. Der Frequenzfilter ist entsprechend zu wählen. Der Frequenzfilter wird vorteilhaft insbesondere abhängig von einem dynamischen Zustand (bspw. der Fluggeschwindigkeit, der Flughöhe, etc.) und/oder von einer Konfiguration des Luftfahrzeugs vorgegeben.

Ein zweiter Aspekt der vorliegenden Erfindung betrifft ein Luftfahrzeug mit einer Vorrichtung, wie sie vorstehend erläutert wurde. Vorteilhaft ist der jeweilige Regler in dem Luftfahrzeug an dem zumindest einen Aktor oder in einer unmittelbaren Umgebung des zumindest einen Aktors angeordnet. Dies ermöglicht kurze Signallaufzeiten zwischen dem Regler und dem Sensorsystem und damit eine Verkürzung von Aktorreaktionszeiten und so eine verbesserte effektive Verminderung von zusätzlichen Böenlasten.

Vorteilhafte Weiterbildungen des Luftfahrzeugs ergeben sich durch eine analoge und sinngemäße Übertragung der vorstehend zu der erfindungsgemäßen Vorrichtung gemachten Ausführungen.

Ein dritter Aspekt der vorliegenden Erfindung betrifft ein Verfahren zur Verminderung von an einer Anzahl n von aerodynamischen Steuerflächen eines Luftfahrzeugs auftretenden Böenlasten, mit $n \geq 1$, wobei die aerodynamischen Steuerflächen durch jeweils zumindest einen Aktor bewegbar sind, und ein Flugsteuerungssystem Führungsgrößen $X_{soll}$ und/oder $\dot{X}_{soll}$, zur Ansteuerung des zumindest einen Aktors einer jeweiligen aerodynamischen Steuerfläche bereitstellt, wobei $X_{soll}$ eine Soll-Position oder eine Soll-Kraft oder ein Soll-Moment und $\dot{X}_{soll}$ eine zeitliche Änderung von $X_{soll}$ angibt.

Das vorgeschlagene Verfahren umfasst erfindungsgemäß folgende Schritte. In einem ersten Schritt erfolgt ein Ermitteln von auf eine jeweilige aerodynamische Steuerfläche von extern einwirkenden und durch Böen erzeugten Kräften/Momenten $F_{ext,Boe}$.

In einem zweiten Schritt erfolgt mittels eines jeweiligen Reglers auf Basis von: $F_{ext,Boe}$, der Führungsgrößen: $X_{soll}$ und/oder $\dot{X}_{soll}$ und vom Aktor erzeugter und von einem Sensorsystem erfasster Regelgrößen: $X$ und/oder $\dot{X}$ ein Regeln des zumindest einen Aktors derart, dass durch Böen erzeugte Kräfte/Momente $F_{ext,Boe}$ an der jeweiligen aerodynamischen Steuerfläche kompensiert werden.

In einer vorteilhaften Weiterbildung des vorgeschlagenen Verfahrens erfolgt das Regeln des zumindest einen Aktors derart, dass die durch Böen erzeugten Kräfte $F_{ext,Boe}$ überkompensiert werden.

Eine vorteilhafte Weiterbildung des vorgeschlagenen Verfahrens zeichnet sich dadurch aus, dass eine Führungsgrößen-Vorsteuerung für die Führungsgrößen $X_{soll}$ und/oder $\dot{X}_{soll}$ vorhanden ist, wobei der zumindest eine Aktor mit einer Stellgröße $S_{SOLL}$ angesteuert wird, die sich als Summe aus der Stellgröße $S_{FV}$ der Führungsgrößen-Vorsteuerung und der Stellgröße $S_{RE}$ des Reglers ergibt: $S_{SOLL} = S_{FV} + S_{RE}$. Der Führungsgrößen-Vorsteuerung werden hierzu die von dem Sensorsystem aktuell erfassten Regelgrößen: $X$ und/oder $\dot{X}$ bereitgestellt. Je nach Auslegung der Flugführungssteuerung ist der jeweilige Regler ein Positionsregler oder ein Stellratenregler oder ein Kraftregler.

Eine vorteilhafte Weiterbildung des vorgeschlagenen Verfahrens zeichnet sich dadurch aus, dass der jeweilige Regler folgendes Regelungsmodell verwendet:

$$F_R = (X - X_{soll}) \cdot c + (\dot{X} - \dot{X}_{soll}) \cdot d$$

mit:

$F_R$:    Stellgröße des Reglers, die eine Kraft angibt
$X$:    Regelgröße, die eine Position angibt
$\dot{X}$:    Zeitableitung der Regelgröße Position $X$
$c$:    Steifigkeit
$d$:    Dämpfung

wobei gilt: $S_{RE} = F_R$ und $S_{FV}$ eine Kraft angibt.

Eine vorteilhafte Weiterbildung des vorgeschlagenen Verfahrens zeichnet sich dadurch aus, dass der jeweilige Regler folgendes Regelungsmodell verwendet:

$$F_R = F_{soll} + F_{ext,Boe} \cdot k + \dot{X} \cdot d$$

mit:

$F_R$: Stellgröße des Reglers, die eine Kraft angibt
$X$: Regelgröße, die eine Position angibt
$\dot{X}$: Zeitableitung der Regelgröße Position $X$
k: Parameter
d: Dämpfung

Vorteilhaft sind die Steifigkeit c und/oder die Dämpfung d und/oder der Parameter k als Konstanten vorgegeben. Alternativ werden die Steifigkeit c und/oder die Dämpfung d und/oder der Parameter k abhängig von Flugzuständen des Flugzeugs und/oder frequenzbasiert abhängig vom Frequenzspektrum auftretender externer Kräfte auf die aerodynamische Steuerfläche vorgegeben. Die Werte von c, d, k können linear oder nicht linear variieren.

Eine vorteilhafte Weiterbildung des vorgeschlagenen Verfahrens zeichnet sich dadurch aus, dass die Steifigkeit c einen ersten Wert c1 aufweist, der im Fall von $F_{ext,Boe} \neq 0$ oder $|F_{ext,Boe}| > G1$ (G1 = vorgegebener Grenzwert) auf einen zweiten Wert c2 reduziert wird, mit c2 < c1, wobei c2 derart gewählt ist, dass $F_{ext,Boe}$ vollständig kompensiert oder überkompensiert wird.

Eine vorteilhafte Weiterbildung des vorgeschlagenen Verfahrens zeichnet sich dadurch aus, dass der Parameter k einen ersten Wert k1 aufweist, der im Fall von $F_{ext,Boe} \neq 0$ oder $|F_{ext,Boe}| > G1$ (G1 = vorgegebener Grenzwert) auf einen zweiten Wert k2 reduziert wird, mit k2 < k1, wobei k2 derart gewählt ist, dass $F_{ext,Boe}$ vollständig kompensiert oder überkompensiert wird.

Zur angeführten Überkompensation der Kräfte/Momente $F_{ext,Boe}$ kann die Steifigkeit c bzw. der Parameter k negative Werte annehmen.

Eine vorteilhafte Weiterbildung des vorgeschlagenen Verfahrens zeichnet sich dadurch aus, dass die Messung einer/eines externen auf die jeweilige aerodynamische Steuerfläche einwirkenden Gesamtkraft/Gesamtmoments $F_{ext,Ges}$, mit $F_{ext,Ges} = F_{ext,Boe} + F_{ext,Rest}$ durch einen Kraft-/Momentensensor erfolgt, wobei $F_{ext,Rest}$ die an der aerodynamischen Steuerfläche wirkende Luftkraft ohne Vorliegen von Böen ($F_{ext,Boe} = 0$) bezeichnet, und auf Basis der Führungsgrößen $X_{soll}$ und/oder $\dot{X}_{soll}$ einer aktuellen Fluggeschwindigkeit des Luftfahrzeugs $V_{LuftFZ}$, einer aktuellen Flughöhe $H_{LuftFz}$ des Luftfahrzeugs und einer aktuellen Temperatur $T_{LuftFZ}$ der das Luftfahrzeug umgebenden Luft eine darauf basierende Schätzung der/des an der jeweiligen aerodynamischen Steuerfläche wirkenden Kraft/Moments $F_{ext,Rest}^{*}$ ohne Vorliegen von Böen erfolgt. Auf Basis dieser Schätzung und der Messung der Gesamt-Kraft $F_{ext,Ges}$ wird anschließend die/das zusätzliche durch Böen erzeugte Kraft/Moment $F_{ext,Boe}$ ermittelt.

Ein weiterer Aspekt der Erfindung betrifft ein Computersystem, mit einer Datenverarbeitungsvorrichtung, wobei die Datenverarbeitungsvorrichtung derart ausgestaltet ist, dass ein Verfahren, wie vorstehend ausgeführt, auf der Datenverarbeitungsvorrichtung ausgeführt wird.

Ein weiterer Aspekt der Erfindung betrifft ein digitales Speichermedium mit elektronisch auslesbaren Steuersignalen, wobei die Steuersignale so mit einem programmierbaren Computersystem zusammenwirken können, dass ein Verfahren, wie vorstehend ausgeführt, ausgeführt wird.

Ein weiterer Aspekt der Erfindung betrifft ein Computer-Programm-Produkt mit auf einem maschinenlesbaren Träger gespeicherten Programmcode zur Durchführung des Verfahrens, wie vorstehend ausgeführt, wenn der Programmcode auf einer Datenverarbeitungsvorrichtung ausgeführt wird.

Ein weiterer Aspekt der Erfindung betrifft ein Computer-Programm mit Programmcodes zur Durchführung des Verfahrens, wie vorstehend ausgeführt, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1 einen schematisierten Aufbau einer erfindungsgemäßen Vorrichtung und
Fig. 2 einen schematisierten Ablauf eines erfindungsgemäßen Verfahrens.

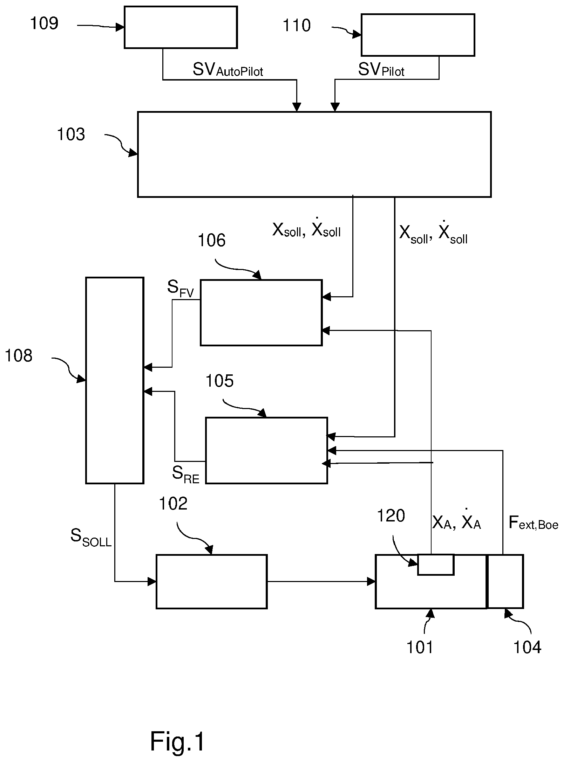

**Fig. 1** zeigt einen schematisierten Aufbau einer erfindungsgemäßen Vorrichtung zur Verminderung von an einem Luftfahrzeug auftretenden Böenlasten. Das Luftfahrzeug weist eine aerodynamische Steuerfläche 101, vorliegend ein Höhenruder auf, das durch einen Aktor 102 bewegbar ist. Weiterhin weist das Flugzeug ein Flugsteuerungssystem 103 auf, das Steuervorgaben $SV_{Pilot}$ von einem Eingabemittel 110 für einen Piloten sowie Steuervorgaben $SV_{AutoPilot}$ von einem Autopiloten 109 erhält. Das Eingabemittel 110 umfasst Seitenruderpedale zur Vorgabe von Steuersignalen für eine Bewegung des Luftfahrzeugs um die Hochachse sowie einen sogenannten "Side Stick" zur Vorgabe von Steuersignalen für Bewegungen des Luftfahrzeugs um die Quer- und Längsachse. Das Flugsteuerungssystem 103 verarbeitet die Vorgaben des Eingabemittels 110 sowie des Autopiloten 109 und erzeugt daraus Führungsgrößen $X_{soll}$ und $\dot{X}_{soll}$ zur Ansteuerung des Aktors 102, wobei $X_{soll}$ vorliegend eine Soll-Position und $\dot{X}_{soll}$ eine zeitliche Änderung von $X_{soll}$ angibt.

Die Vorrichtung umfasst ein Sensorsystem 104, das auf die Steuerfläche 101 von extern einwirkende und durch Böen erzeugte Kräfte $F_{ext,Boe}$ ermittelt.

Weiterhin umfasst die Vorrichtung einen Regler 105 zur Regelung des Aktors 102 auf Basis folgender Größen: $F_{ext,Boe}$, der Führungsgrößen $X_{soll}$ und $\dot{X}_{soll}$ sowie vom Aktor 102 erzeugter und von einem Sensorsystem 120 erfasster Regelgrößen $X$ und $\dot{X}$, wobei das Sensorsystem 120 zur Erfassung der Regelgrößen im Triebstrang zwischen Aktor 102 und Steuerfläche 101 einen Positionssensor aufweist. Somit geben die Regelgrößen $X$ und $\dot{X}$ eine Kraft und deren zeitliche Ableitung an.

Erfindungsgemäß ist der Regler 105 derart ausgeführt und eingerichtet, dass er ein Regelungsverhalten aufweist, bei dem die durch Böen erzeugten Kräfte $F_{ext,Boe}$ kompensiert werden. Die Vorrichtung weist vorliegend eine Vorsteuerung 106 für die Führungsgrößen $X_{soll}$ und $\dot{X}_{soll}$ auf. Der Stellgrößenausgang der Führungsgrößen-Vorsteuerung liefert die Stellgröße $S_{FV}$, der Stellgrößenausgang des Reglers 105 liefert die Stellgröße $S_{RE}$. Beide Stellgrößen werden in einem Summierer 108 zu einer Stellgröße $S_{SOLL} = S_{FV} + S_{RE}$ kombiniert, die dann dem Regler 105 zugeführt wird.

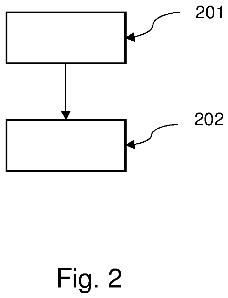

**Fig. 2** zeigt einen schematisierten Ablauf eines erfindungsgemäßen Verfahrens zur Verminderung von an einem Luftfahrzeug auftretenden Böenlasten, wobei das Luftfahrzeug zumindest eine aerodynamische Steuerfläche 101 aufweist, die durch einen Aktor 102 bewegbar ist, und ein Flugsteuerungssystem 103 Führungsgrößen: $X_{soll}$ und/oder $\dot{X}_{soll}$ zur Ansteuerung des Aktors 102 bereitstellt, wobei $X_{soll}$ eine Soll-Position oder eine Soll-Kraft oder ein Soll-Moment und $\dot{X}_{soll}$ eine zeitliche Änderung von $X_{soll}$ angibt. Das Verfahren umfasst folgende Schritte. In einem ersten Schritt 201 erfolgt ein Ermitteln von auf die Steuerfläche 101 von extern einwirkenden und durch Böen erzeugten Kräften $F_{ext,Boe}$. In einem zweiten Schritt 202 erfolgt mittels eines Reglers 105 auf Basis von $F_{ext,Boe}$, der Führungsgrößen $X_{soll}$ und/oder $\dot{X}_{soll}$ und vom Aktor erzeugter und von einem Sensorsystem 120 erfasster Regelgrößen: $X$ und/oder $\dot{X}$ ein Regeln des Aktors 102 derart, dass durch Böen erzeugte Kräfte $F_{ext,Boe}$ kompensiert werden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterung in der Beschreibung, definiert wird.

Bezugszeichenliste

| | |
|---|---|
| 101 | Steuerfläche |
| 102 | Aktor |
| 103 | Flugsteuerungssystem |
| 104 | Sensorsystem |
| 105 | Regler |
| 106 | Führungsgrößen-Vorsteuerung |
| 108 | Summierer |
| 109 | Autopilot |
| 110 | Eingabemittel zur Eingabe von Steuervorgaben durch einen Piloten |
| 120 | Sensorsystem zur Erfassung der Regelgrößen $X_A$ und/oder $\dot{X}_A$ |
| $SV_{AutoPilot}$ | Steuerungsvorgaben durch den Autopiloten |
| $SV_{Pilot}$ | Steuerungsvorgaben durch den Piloten |
| $X_{soll}$ | Soll-Position des Aktors |
| $S_{FV}$ | Stellgröße der Führungsgrößen-Vorsteuerung |

| | |
|---|---|
| $S_{RE}$ | Stellgröße des Reglers |
| $X_A$ | Regelgröße des Aktors |
| $F_{ext,Boe}$ | durch Böen erzeugte Kräfte/Momente |
| 201,202 | Verfahrensschritte |

**Patentansprüche**

1. Vorrichtung zur Verminderung von an einer Anzahl n von aerodynamischen Steuerflächen (101) eines Luftfahrzeugs auftretenden Böenlasten, mit n ≥ 1, wobei die aerodynamischen Steuerflächen (101) durch jeweils zumindest einen Aktor (102) bewegbar sind, und ein Flugsteuerungssystem (103) Führungsgrößen $X_{soll}$ und/oder $\dot{X}_{soll}$ zur Ansteuerung des zumindest einen Aktors (102) einer jeweiligen aerodynamischen Steuerfläche (101) bereitstellt, wobei $X_{soll}$ eine Soll-Position oder eine Soll-Kraft oder ein Soll-Moment und $\dot{X}_{soll}$ eine zeitliche Änderung von $X_{soll}$ angibt, umfassend:

   - ein Sensorsystem (104) je aerodynamischer Steuerfläche (101), das auf die jeweilige aerodynamische Steuerfläche (101) von extern einwirkende und durch Böen erzeugte Kräfte/Momente $F_{ext,Boe}$ ermittelt, und
   - einen jeweiligen Regler (105) zur Regelung des zumindest einen Aktors (102) auf Basis von: $F_{ext,Boe}$, der Führungsgrößen $X_{soll}$ und/oder $X_{soll}$ sowie vom Aktor (102) erzeugter und von einem Sensorsystem (120) erfasster Regelgrößen $X$ und/oder $\dot{X}$, wobei der Regler (105) ein Regelungsverhalten aufweist, bei dem die durch Böen erzeugten Kräfte/Momente $F_{ext,Boe}$ an der jeweiligen aerodynamischen Steuerfläche (101) kompensiert werden.

2. Vorrichtung nach Anspruch 1,
   bei der der jeweilige Regler (105) einen Prozessor PR1 aufweist, der mit einer Prozessortaktrate PT1 arbeitet und das Flugsteuerungssystem (103) einen Prozessor $PR_F$ aufweist, der mit einer Prozessortaktrate PT2 arbeitet, wobei gilt: PT1 > PT2, insbesondere PT1 > 2 * PT2.

3. Vorrichtung nach Anspruch 1 oder 2,
   bei der eine Führungsgrößen-Vorsteuerung (106) für die Führungsgrößen $X_{soll}$ und/oder $\dot{X}_{soll}$ vorhanden ist, wobei der zumindest eine Aktor (102) der jeweiligen aerodynamischen Steuerfläche (101) mit einer Stellgröße $S_{SOLL}$ angesteuert wird, die sich als Summe aus der Stellgröße $S_{FV}$ der Führungsgrößen-Vorsteuerung (106) und der Stellgröße SRE des jeweiligen Reglers (105) ergibt: $S_{SOLL} = S_{FV} + S_{RE}$.

4. Vorrichtung nach einem der Ansprüche 1 bis 3,
   bei der der jeweilige Regler (105) folgendes Regelungsmodell verwendet:

$$(1) \qquad F_R = (X - X_{soll}) \cdot c + (\dot{X} - \dot{X}_{soll}) \cdot d$$

   mit:

   $F_R$: Stellgröße des Reglers, die eine Kraft angibt
   $X$: Regelgröße, die eine Position angibt
   $\dot{X}$: Zeitableitung der Regelgröße Position $X$
   c: Steifigkeit
   d: Dämpfung

   wobei gilt: $S_{RE} = F_R$ und $S_{FV}$ eine Kraft angibt.

5. Vorrichtung nach einem der Ansprüche 1 bis 3,
   bei der der jeweilige Regler (105) folgendes Regelungsmodell verwendet:

$$(2) \qquad F_R = F_{soll} + F_{ext,Boe} \cdot k + \dot{X} \cdot d$$

   mit:

$F_R$: Stellgröße des Reglers, die eine Kraft angibt
$X$: Regelgröße, die eine Position angibt
$\dot{X}$: Zeitableitung der Regelgröße Position $X$
k: Parameter
d: Dämpfung

6. Vorrichtung nach einem der Ansprüche 1 bis 5,
bei der der zumindest eine Aktor (102) der jeweiligen aerodynamischen Steuerfläche (101) ein Elektromotor ist.

7. Vorrichtung nach Anspruch 6,
bei der die Stellgröße $S_{SOLL}$ eine Soll-Kraft angibt, die als Führungsgröße einem Kraftregler zugeführt wird, wobei der Kraftregler einen Strom für den Elektromotor regelt.

8. Vorrichtung nach einem der Ansprüche 1 bis 7,
bei dem

- ein jeweiliges Sensorsystem (104) zur Messung einer externen auf die jeweilige aerodynamische Steuerfläche (101) einwirkenden Gesamtkraft $F_{ext,Ges}$, mit $F_{ext,Ges} = F_{ext,Boe} + F_{ext,Rest}$ einen Kraftsensor aufweist, mit $F_{ext,Rest}$: an der aerodynamischen Steuerfläche (101) wirkende Luftkraft ohne Vorliegen von Böen: $F_{ext,Boe} = 0$ und
- das jeweilige Sensorsystem (104) derart ausgeführt und eingerichtet ist, dass auf Basis der Führungsgrößen $X_{soll}, \dot{X}_{soll}$, einer aktuellen Fluggeschwindigkeit des Luftfahrzeugs $V_{LuftFZ}$, einer aktuellen Flughöhe $H_{LuftFz}$ des Luftfahrzeugs und einer aktuellen Temperatur $T_{LuftFZ}$ der das Luftfahrzeug umgebenden Luft eine darauf basierende Schätzung der an der jeweiligen Steuerfläche (101) wirkenden Luftkraft $F_{ext,Rest}^*$ ohne Vorliegen von Böen erfolgt, wobei sich $F_{ext,Boe}$ wie folgt ergibt: $F_{ext,Boe} = F_{ext,Ges} - F_{ext,Rest}^*$.

9. Luftfahrzeug mit einer Vorrichtung nach einem der Ansprüche 1 bis 8.

10. Verfahren zur Verminderung von an einer Anzahl n von aerodynamischen Steuerflächen (101) eines Luftfahrzeugs auftretenden Böenlasten, mit n ≥ 1, wobei die aerodynamischen Steuerflächen (101) durch jeweils zumindest einen Aktor (102) bewegbar sind, und ein Flugsteuerungssystem (103) Führungsgrößen $X_{soll}$ und/oder $\dot{X}_{soll}$ zur Ansteuerung des zumindest einen Aktors (102) einer jeweiligen aerodynamischen Stellfläche (101) bereitstellt, wobei $X_{soll}$ eine Soll-Position oder eine Soll-Kraft oder ein Soll-Moment und $\dot{X}_{soll}$ eine zeitliche Änderung von $X_{soll}$ angibt, mit folgenden Schritten:

- Ermitteln von auf eine jeweilige aerodynamische Steuerfläche (101) von extern einwirkenden und durch Böen erzeugten Kräften/Momenten $F_{ext,Boe}$, und
- Mittels eines jeweiligen Reglers (105) auf Basis von $F_{ext,Boe}$, der Führungsgrößen $X_{soll}$ und/oder $\dot{X}_{soll}$ und vom Aktor (102) erzeugter und von einem Sensorsystem (120) erfasster Regelgrößen: $X$ und/oder $\dot{X}$ Regeln des zumindest einen Aktors (102) derart, dass durch Böen erzeugte Kräfte/Momente $F_{ext,Boe}$ an der jeweiligen aerodynamischen Steuerfläche (101) kompensiert werden.

## Claims

1. Device for the reduction of gust loads occurring on a number n of aerodynamic control surfaces (101) of an aircraft, where n ≥ 1, wherein the aerodynamic control surfaces (101) can be moved in each case by at least one actuator (102), and a flight control system (103) provides command variables $X_{soll}$ and/or $\dot{X}_{soll}$ for purposes of actuating the at least one actuator (102) of a respective aerodynamic control surface (101), wherein $X_{soll}$ indicates a target position, or a target force, or a target moment, and $\dot{X}_{soll}$ indicates a change in $X_{soll}$ over time, comprising:

- a sensor system (104) for each aerodynamic control surface (101), which determines external forces/moments $F_{ext,Boe}$, generated by gusts, acting on the respective aerodynamic control surface (101), and
- a respective controller (105), for purposes of controlling the at least one actuator (102) on the basis of: $F_{ext,Boe}$, the command variables $X_{soll}$ and/or $\dot{X}_{soll}$, as well as control variables $X$ and/or $\dot{X}$, generated by the actuator (102), and detected by a sensor system (120), wherein the controller (105) has a control behaviour, in which the forces/moments $F_{ext,Boe}$ generated by gusts are compensated for on the respective aerodynamic control surface (101).

**2.** Device according to Claim 1,
in which the respective controller (105) has a processor PR1, which operates at a processor clock rate PT1, and the flight control system (103) has a processor PR$_F$, which operates at a processor clock rate PT2, wherein: PT1 > PT2 applies, in particular PT1 > 2·PT2.

**3.** Device according to Claim 1 or 2,
in which a command variable pilot control (106) is present for the command variables $X_{soll}$ and/or $\dot{X}_{soll}$, wherein the at least one actuator (102) of the respective aerodynamic control surface (101) is actuated with a correcting variable S$_{SOLL}$, which is calculated as the sum of the correcting variable S$_{FV}$ of the command variable pilot control (106) and the correcting variable S$_{RE}$ of the respective controller (105), that is to say, S$_{SOLL}$ = S$_{FV}$ + S$_{RE}$.

**4.** Device according to one of the Claims 1 to 3,
in which the respective controller (105) uses the following control model:

$$(1) \quad F_R \ = \ (X \ - \ X_{soll}) \cdot c \ + \ (\dot{X} \ - \ \dot{X}_{soll}) \cdot d$$

where:

$F_R$: Correcting variable of the controller, which specifies a force
$X$: Control variable, which specifies a position
$\dot{X}$: Time derivative of the control variable position $X$
$c$: Stiffness
$d$: Damping

wherein:
S$_{RE}$ = $F_R$ applies, and S$_{FV}$ specifies a force.

**5.** Device according to one of the Claims 1 to 3,
in which the respective controller (105) uses the following control model:

$$(2) \quad F_R \ = \ F_{soll} \ + \ F_{ext,Boe} \ \cdot \ k \ + \ \dot{X} \cdot d$$

where:

$F_R$: Correcting variable of the controller, which specifies a force
$X$: Control variable, which specifies a position
$\dot{X}$: Time derivative of the control variable position $X$
$k$: Parameter
$d$: Damping

**6.** Device according to one of the Claims 1 to 5,
in which the at least one actuator (102) of the respective aerodynamic control surface (101) is an electric motor.

**7.** Device according to Claim 6,
in which the correcting variable S$_{SOLL}$ specifies a target force, which is fed to a force controller as a command variable, wherein the force regulator controls a current for the electric motor.

**8.** Device according to one of the Claims 1 to 7,

- in which a respective sensor system (104) has a force sensor for the measurement of a total external force F$_{ext,Ges}$ acting on the respective aerodynamic control surface (101), where F$_{ext,Ges}$ = F$_{ext,Boe}$ + F$_{ext,Rest}$ , and F$_{ext,Rest}$ is the force of the air acting on the aerodynamic control surface (101) in the absence of gusts, that is to say, when F$_{ext,Boe}$ = 0, and
- the respective sensor system (104) is embodied and set up, such that, on the basis of the command variables $X_{soll}$, $\dot{X}_{soll}$ of a current flight speed of the aircraft V$_{LuftFz}$, a current flight altitude H$_{LuftFz}$ of the aircraft, and a current temperature T$_{LuftFz}$ of the air surrounding the aircraft, an estimate is made on this basis of the air force

$F_{ext,Rest}$* acting on the respective control surface (101) in the absence of gusts, wherein $F_{ext,Boe}$ is calculated as follows: $F_{ext,Boe} = F_{ext,Ges} - F_{ext,Rest}$*.

9. Aircraft with a device according to one of the Claims 1 to 8.

10. Method for the reduction of gust loads occurring on a number n of aerodynamic control surfaces (101) of an aircraft, where n ≥ 1, wherein the aerodynamic control surfaces (101) can be moved in each case by at least one actuator (102), and a flight control system (103) provides command variables $X_{soll}$ and/or $\dot{X}_{soll}$ for purposes of actuating the at least one actuator (102) of a respective aerodynamic control surface (101), wherein $X_{soll}$ specifies a target position, or a target force, or a target moment, and $\dot{X}_{soll}$ specifies a change in $X_{soll}$ over time, with the following steps:

- determination of forces/moments $F_{ext,Boe}$, acting externally on a respective aerodynamic control surface (101), and generated by gusts, and
- by means of a respective controller (105) on the basis of $F_{ext,Boe}$, the command variables $X_{soll}$ and/or $\dot{X}_{soll}$, and control variables $X$ and/or $\dot{X}$ generated by the actuator (102) and detected by a sensor system (120), control of the at least one actuator (102), such that forces/moments $F_{ext,Boe}$ generated by gusts are compensated for on the respective aerodynamic control surface (101).

**Revendications**

1. Dispositif destiné à la réduction de charges de rafales arrivant sur un nombre n de gouvernes aérodynamiques (101) d'un aéronef, n étant ≥ 1, dans lequel les gouvernes aérodynamiques (101) sont mobiles par le fait d'au moins un actionneur (102) respectif, et un système de commande de vol (103) fournit des grandeurs de guidage $X_{soll}$ et/ou $\dot{X}_{soll}$ pour commander l'au moins un actionneur (102) d'une gouverne aérodynamique (101) respective, dans lequel $X_{soll}$ indique une position de consigne ou une force de consigne ou un moment de consigne et $\dot{X}_{soll}$ indique une modification temporelle de $X_{soll}$, comprenant :

- un système de capteurs (104) par gouverne aérodynamique (101) qui détermine des forces/moments $F_{ext,Boe}$ agissant de l'extérieur sur la gouverne aérodynamique (101) respective et produits par des rafales, et
- un régulateur (105) respectif pour réguler l'au moins un actionneur (102) en se basant sur : $F_{ext,Boe}$, les grandeurs de guidage $X_{soll}$ et/ou $\dot{X}_{soll}$ ainsi que les grandeurs de réglage $X$ et/ou $\dot{X}$ produites par l'actionneur (102) et détectées par un système de capteurs (120), dans lequel le régulateur (105) présente un comportement de régulation dans lequel les forces/moments $F_{ext,Boe}$ produits par des rafales sont compensés sur la gouverne aérodynamique (101) respective.

2. Dispositif selon la revendication 1, dans lequel le régulateur (105) respectif présente un processeur PR1 qui travaille à une vitesse de cadence de processeur PT1 et le système de commande de vol (103) présente un processeur $PR_F$ qui travaille à une vitesse de cadence de processeur PT2, sachant que : PT1 > PT2, en particulier PT1 > 2·PT2.

3. Dispositif selon la revendication 1 ou 2, dans lequel une pré-commande de grandeur de guidage (106) pour les grandeurs de guidage $X_{soll}$ et/ou $\dot{X}_{soll}$ est disponible, dans lequel l'au moins un actionneur (102) de la gouverne aérodynamique (101) respective est commandé avec une grandeur de réglage $S_{SOLL}$, qui est la somme de la grandeur de réglage $S_{FV}$ de la pré-commande de grandeur de guidage (106) et de la grandeur de réglage $S_{RE}$ du régulateur (105) respectif : $S_{SOLL} = S_{FV} + S_{RE}$.

4. Dispositif selon l'une des revendications 1 à 3, dans lequel le régulateur (105) respectif emploie le modèle de régulation suivant :

$$(1) \quad F_R = (X - X_{soll}) \cdot c + (\dot{X} - \dot{X}_{soll}) \cdot d$$

où :

$F_R$ : grandeur de réglage du régulateur indiquant une force
$X$ : grandeur de réglage indiquant une position
$\dot{X}$ : dérivée temporelle de la grandeur de réglage position X
c : rigidité

d : atténuation

sachant que $S_{RE} = F_R$ et $S_{FV}$ indique une force.

5. Dispositif selon l'une des revendications 1 à 3, dans lequel le régulateur (105) respectif emploie le modèle de régulation suivant :

$$(2) \quad F_R = F_{soll} + F_{ext,Boe} \cdot k + \dot{X} \cdot d$$

où :

    $F_R$ : grandeur de réglage du régulateur indiquant une force
    $X$ : grandeur de réglage indiquant une position
    $\dot{X}$ : dérivée temporelle de la grandeur de réglage position X
    k : paramètre
    d : atténuation

6. Dispositif selon l'une des revendications 1 à 5, dans lequel l'au moins un actionneur (102) de la gouverne aérodynamique (101) respective est un moteur électrique.

7. Dispositif selon la revendication 6, dans lequel la grandeur de réglage $S_{SOLL}$ indique une force de consigne qui est fournie à un régulateur de force en tant que grandeur de guidage, dans lequel le régulateur de force régule un courant pour le moteur électrique.

8. Dispositif selon l'une des revendications 1 à 7, dans lequel

    - un système de capteurs (104) respectif pour mesurer une force totale $F_{ext,Ges}$ externe agissant sur la gouverne aérodynamique (101) respective, présente un capteur de force avec $F_{ext,Ges} = F_{ext,Boe} + F_{ext,Rest}$, avec $F_{ext,Rest}$ : force de l'air agissant sur la gouverne aérodynamique (101) sans la présence de rafales : $F_{ext,Boe} = 0$ et
    - le système de capteurs (104) respectif est ainsi conçu et équipé qu'en se basant sur les grandeurs de guidage $X_{soll}$, $\dot{X}_{soll}$, une vitesse de vol actuelle de l'aéronef $V_{LuftFz}$, une hauteur de vol actuelle $H_{LuftFz}$ de l'aéronef et une température actuelle $T_{LuftFZ}$ de l'air entourant l'aéronef, une estimation se basant dessus de la force de l'air $F_{ext,Rest}{}^*$ agissant sur la gouverne aérodynamique (101) respective sans la présence de rafales est effectuée, $F_{ext,Boe}$ étant calculé comme suit : $F_{ext,Boe} = F_{ext,Ges} - F_{ext,Rest}{}^*$.

9. Aéronef comprenant un dispositif selon l'une des revendications 1 à 8.

10. Procédé destiné à la réduction de charges de rafales arrivant <u>sur un nombre n de gouvernes aérodynamiques (101)</u> d'un aéronef, n étant $\geq 1$, dans lequel les gouvernes aérodynamiques (101) sont mobiles par le fait d'au moins un actionneur (102) respectif, et un système de commande de vol (103) fournit des grandeurs de guidage $X_{soll}$ et/ou $\dot{X}_{soll}$ pour commander l'au moins un actionneur (102) d'une gouverne aérodynamique (101) respective, dans lequel $X_{soll}$ indique une position de consigne ou une force de consigne ou un moment de consigne et $\dot{X}_{soll}$ indique une modification temporelle de $X_{soll}$, comprenant les étapes suivantes :

    - détermination de forces/moments $F_{ext,Boe}$ agissant de l'extérieur sur la gouverne aérodynamique (101) respective et produits par des rafales, et
    - au moyen d'un régulateur (105) respectif, en se basant sur : $F_{ext,Boe}$, les grandeurs de guidage $X_{soll}$ et/ou $\dot{X}_{soll}$ et les grandeurs de réglage X et/ou $\dot{X}$ produites par l'actionneur (102) et détectées par un système de capteurs (120), régulation de l'au moins un actionneur (102) de telle façon que des forces/moments $F_{ext,Boe}$ produits par des rafales sont compensés sur la gouverne aérodynamique (101) respective.

109 →

110 →

$SV_{AutoPilot}$          $SV_{Pilot}$

103 →

$X_{soll}, \dot{X}_{soll}$          $X_{soll}, \dot{X}_{soll}$

106

$S_{FV}$

108 →

105

$S_{RE}$

102

$S_{SOLL}$

120          $X_A, \dot{X}_A$          $F_{ext,Boe}$

101          104

Fig.1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014108336 A1
- DE 102011114222 A1
- WO 2009144312 A1
- US 20160328891 A1
- US 8050780 B2
- US 20100332052 A1
- EP 1814006 A1
- WO 2012168086 A2
- WO 2015088967 A1